# EUROPÄISCHE PATENTANMELDUNG

(11) **EP 3 309 054 A1**
(43) Veröffentlichungstag der Anmeldung: **18.04.2018**
(21) Anmeldenummer: 17195533.9
(22) Anmeldetag: 09.10.2017
(51) Int. Cl.: B63H 1/16, B63H 23/24

(54) **MANTELSTRÖMUNGSMASCHINE**

(30) Priorität: 14.10.2016 DE 102016119593
(71) Anmelder: Stähle, Kurt, 75242 Neuhausen-Steinegg (DE)
(72) Erfinder: Stähle, Kurt, 75242 Neuhausen-Steinegg (DE)
(74) Vertreter: Wacker, Jost Oliver

(57) **Zusammenfassung**

Die Erfindung betrifft eine Mantelströmungsmaschine (2), die sowohl als Elektroantrieb als auch als Generator betreibbar ist, mit einem an einer Außenseite umströmbaren Mantelgehäuse (4), dessen Profil sich zu einer ersten Stirnseite (12), an der eine erste stirnseitige Öffnung (18) ausgebildet ist, und zu einer zweiten Stirnseite (16), an der eine zweite stirnseitige Öffnung (20) ausgebildet ist, hin verjüngt, wobei sich zwischen den beiden stirnseitigen Öffnungen (18, 20) ein Fließpfad (22) entlang einer Hauptachse (A) erstreckt, und mit einer elektrischen Maschine (6), die am Mantelgehäuse (4) einen Stator (25) und einen innerhalb des Stators (25) verdrehbar gelagerten Rotor (24) aufweist, wobei der Rotor (24) eine freie Drehachse (D) definiert und dabei einen Rotorring (26) und eine Anordnung von sich ausgehend vom Rotorring (26) zu einem jeweiligen freien Rand (30) hin radial erstreckenden Rotorblättern aufweist und die freien Ränder (30) der Rotorblätter in Projektionsrichtung (PR) parallel zur Hauptachse (A) eine freie Kreisfläche (32) begrenzen. Dabei ist vorgesehen, dass die Rotorblätter durch Leitbleche (28) gebildet sind, die sich in Richtung der Hauptachse (A) wenigstens über die gesamte axiale Länge des Rotorrings (26) erstrecken.

## Beschreibung

Die Erfindung betrifft eine Mantelströmungsmaschine die sowohl als Elektroantrieb für Wasserfahrzeuge als auch als Generator für die Erzeugung von elektrischem Strom aus einer Wasserströmung betrieben werden kann. Hierzu weist die Mantelströmungsmaschine ein Mantelgehäuse auf, das an einer Außenseite umströmt werden kann. Das Profil des Mantelgehäuses verjüngt sich dabei hin zu einer ersten Stirnseite, an der eine erste stirnseitige Öffnung ausgebildet ist, und hin zu einer zweiten Stirnseite, an der eine zweite stirnseitige Öffnung des Mantelgehäuses ausgebildet ist. Zwischen den beiden stirnseitigen Öffnungen erstreckt sich hierbei ein Fließpfad entlang einer Hauptachse. Ferner umfasst die Mantelströmungsmaschine eine als elektrische Maschine bezeichnete Anordnung, die am Mantelgehäuse einen Stator und einen innerhalb des Stators verdrehbar gelagerten Rotor aufweist. Der Stator und der Rotor weisen dabei Mittel auf, um in bekannter Weise eine Drehbewegung des Rotors in Strom umwandeln zu können oder durch das Anlegen von Strom den Rotor in Bewegung setzen zu können. Der Rotor definiert hierbei eine freie Drehachse und weist einen Rotorring und eine Anordnung von Rotorblättern auf, die sich ausgehend vom Rotorring zu einem jeweiligen freien Rand hin radial nach innen erstrecken. Diese freien Ränder der Rotorblätter begrenzen in Projektionsrichtung parallel zur Hauptachse eine freie Kreisfläche um die freie Drehachse herum.

Aus WO 2009/153124 A1 ist eine hydroelektrische Turbine bekannt, die am Bug eines Wasserfahrzeugs mitgeführt wird und als Elektromotor und/oder als Generator eingesetzt werden kann. Das Gehäuse der Turbine bildet eine Kort-Düse aus, die sich in Strömungsrichtung konisch verjüngt. Innerhalb des Gehäuses ist ein erster Rotor vorgesehen, der im Antriebsbetrieb eine Strömung erzeugt beziehungsweise im Generatorbetrieb von einer Strömung angetrieben wird. Ferner ist ein weiterer Rotor vorgesehen, der als Grimsches Leitrad fungiert und eine Abweichung des vom ersten Rotor erzeugten Hauptstroms von einer Hauptströmungsrichtung wenigstens teilweise ausgleicht.

Nachteilig an der bekannten Turbine ist, dass diese im Betrieb durch die Bauart und Anzahl der Rotoren sowie durch die Verwendung der sich verjüngenden Kort-Düse relativ hohe Turbulenzen sowie einen relativ hohen Staudruck erzeugt. Insbesondere bei der Verwendung der Mantelströmungsmaschine als Generator beziehungsweise immer dann, wenn die Turbine an einem von einem anderen Motor angetriebenen Wasserfahrzeug mitgeschleppt wird, entstehen hierdurch große Widerstände, aus denen wiederum ein hoher Energieverlust resultiert.

Die Aufgabe der Erfindung ist es, bei einer gattungsgemäßen Mantelströmungsmaschine die genannten Nachteile zu vermeiden und einen wirtschaftlicheren Betrieb zu ermöglichen.

Diese Aufgabe wird durch eine Mantelströmungsmaschine mit den Merkmalen des Anspruchs 1 gelöst. Dabei sind die Rotorblätter durch Leitbleche gebildet, die sich in Richtung der Hauptachse wenigstens über die gesamte axiale Länge des Rotorrings erstrecken. Hierdurch kann die Kraftübertragung von einem das Mantelgehäuse durchströmenden Wasserstrom auf die Leitbleche und umgekehrt über eine relativ große Fläche erfolgen. Hierdurch können die Leitbleche gegenüber der Strömungsrichtung mit einem relativ geringen Anstellwinkel angeordnet werden. Dieser geringe Anstellwinkel der Leitbleche sorgt dafür, dass auf diese im Generatorbetrieb im Wesentlichen nur die Trägheit der durchströmenden Wassermasse wirkt und der Rotor beim Durchströmen der Mantelströmungsmaschine ohne Ausbildung relevanter Turbulenzen angetrieben werden kann. Darüber hinaus ermöglicht diese Ausformung der Leitbleche insbesondere im Zusammenspiel mit dem sich zu beiden Stirnseiten hin verjüngenden äußeren Profil des Mantelgehäuses ein weitestgehend ungestörtes Abtrennen einer zylindrischen Kernströmung aus dem Wasserkörper des betreffenden Gewässers. Beim Durchströmen der Mantelströmungsmaschine kann dabei das Anschneiden der Kernströmung durch die Leitbleche minimiert werden, so dass das Durchströmen in einer sehr stabilen und nahezu turbulenzfreien Weise erfolgt. Anschließend kann die zylindrische Kernströmung wiederum relativ schonend wieder frei gegeben werden. Hierdurch ist insgesamt ein besonders geringer Widerstand der Mantelströmungsmaschine im betreffenden Gewässer gewährleistet. Auf diese Weise kann insbesondere im Generatorbetrieb beziehungsweise beim Mitschleppen der Mantelströmungsmaschine an einem Wasserfahrzeug der entstehende Staudruck erheblich reduziert werden. Zudem kann im Antriebsbetrieb mittels der Leitbleche eine sehr gleichmäßige Antriebsströmung im Mantelgehäuse erzeugt werden, so dass die Mantelströmungsmaschine in jedem Fall einen sehr wirtschaftlichen Betrieb ermöglicht.

In einer besonders vorteilhaften Ausführungsform erstrecken sich die Leitbleche dabei in Richtung der Hauptachse beidseitig über die axiale Länge des Rotorrings hinaus. Auf diese Weise ist es möglich, dass sich die Leitbleche unabhängig von den Abmessungen des Rotorrings in Richtung der Hauptachse über eine relativ große Länge erstrecken. Die Längserstreckung der einzelnen Leitbleche kann dabei insgesamt oder auch zu jeder Seite hin ein Mehrfaches des Rotorrings betragen. Dadurch kann die Kraftbeaufschlagung des Rotors durch den durchströmenden Wasserstrom auf eine sehr große Fläche erfolgen. Auf diese Weise ist es möglich, die Leitbleche unabhängig von der Dimensionierung des Rotorrings flächenmäßig derart auszulegen, dass im Antriebsbetrieb eine optimierte Antriebsströmung erzeugt werden kann und im Generatorbetrieb der Strömungswiderstand der Mantelströmungsmaschine minimiert ist.

Dabei ist es besonders günstig, wenn sich die Leitbleche bezüglich der Hauptachse über eine radiale Höhe erstrecken, die weniger als 50 % eines Innenradius des Rotorringes beträgt. Hieraus resultiert eine relativ geringe Eintauchhöhe der Leitbleche in den resultierenden Fließpfad hinein. Dadurch bleibt ein zylindrischer Kernstrom des Wassers, das die Mantelströmungsmaschine durchströmt in seinem Zentrum unberührt und wird im Übrigen nur relativ schonend von den Leitblechen angeschnitten. Hierdurch weist der Kernstrom sowohl im Antriebs- als auch im Generatorbetrieb eine hohe Stabilität auf und kann nach dem Durchströmen der Wasserturbine wieder relativ schonend freigegeben werden.

Vorteilhafterweise erzeugen die Leitbleche in einer Projektionsrichtung parallel zur Hauptachse Projektionsflächen, die sich in einer Projektionskreisringfläche zwischen der freien Kreisfläche und dem Rotorring über wenigstens 75% erstrecken. Hierdurch ergibt sich in Projektionsrichtung somit eine relativ genaue Anpassung der Rotorblätter an die Projektionskreisringfläche, was eine besonders effektive Kraft- beziehungsweise Momentübertragung vom Kernstrom auf den Rotor und umgekehrt ermöglicht. Dabei ist es besonders günstig, wenn sich die Projektionsflächen der Leitbleche in Projektionsrichtung parallel zur Hauptachse zusammen über 100 %, der Projektionskreisringfläche erstrecken. Um trotz eines geringen Anstellwinkels eine maximierte Kraftübertragung innerhalb der Projektionskreisringfläche zu gewährleisten, kann dabei auch eine Überlappung der Projektionsflächen vorgesehen sein.

Zudem ist es günstig, wenn die Leitbleche symmetrisch ausgebildet sind, um den Rotor in zwei entgegengesetzten Strömungsrichtungen betreiben zu können.

Vorteilhafterweise ist dabei zusätzlich auch das Mantelgehäuse symmetrisch ausgebildet, wodurch die Mantelströmungsmaschine in beiden Strömungsrichtungen eine vergleichbar hohe Leistung erzielen kann.

Ferner ist es günstig, wenn das Mantelgehäuse an beiden Stirnseiten einen cW-Wert von maximal 0,4 aufweist. Hierdurch kann, unabhängig davon, von welcher Seite die Mantelströmungsmaschine durchströmt wird, der im Betrieb an der Mantelströmungsmaschine wirkende Staudruck relativ gering gehalten und unabhängig von der Betriebsart eine relativ schonende Freigabe des Abstroms gewährleistet werden.

Das Mantelgehäuse weist dabei vorteilhafterweise an der ersten Stirnseite eine die erste Öffnung begrenzende erste Schneide und an der zweiten Stirnseite eine die zweite Öffnung begrenzende zweite Schneide auf. Diese Schneiden gehen dabei an voneinander abgewandten Seiten in eine umfängliche Außenseite des Mantelgehäuses über, die über ihre Erstreckung parallel zur Hauptachse hinweg eine stetige konvexe Kontur aufweist. Als Schneide sind hierbei Profile zu verstehen, die sich parallel zur Hauptachse zu einer Spitze hin verjüngen, die scharfkantig oder maximal mit einem Radius von 10mm, vorzugsweise maximal 5mm ausgebildet ist. Durch das konvexe Längsprofil der umfänglichen Außenseite kann dadurch sowohl ein geringer cW-Wert des Mantelgehäuses als auch ein ausreichender Bauraum innerhalb des Mantelgehäuses zur Verfügung gestellt werden, um beispielsweise Bauteile der elektrischen Maschine, wie Spulen-, Lager- und Kontaktelemente, aufnehmen zu können. Der fließende Übergang von der jeweiligen Schneide auf die konvexe Kontur der umfänglichen Außenseite des Mantelgehäuses ermöglicht dabei eine im Wesentlichen ungestörte Abtrennung des die Wasserturbine durchströmenden zylindrischen Kernstroms von dem übrigen Wasserkörper des Fließgewässers. Dieser übrige Wasserkörper bildet nach Abtrennung des Kernstroms an der einen Schneide einen Mantelstrom, der die stetig konvex ausgebildet umfängliche Außenseite, die insbesondere keine sprunghaften Profilsprünge aufweist, im Wesentlichen ungestört umströmen kann, um sich an der anderen Schneide wieder mit dem hier austretenden Kernstrom zu vereinen. Auch bei diesem Wiedereintritt der Kernströmung in die übrige Strömung des Fließgewässers kann durch die hier wirkende Schneide die Ausbildung von merklichen Turbulenzen verhindert werden.

In einer vorteilhaften Ausführungsform begrenzen die beiden Schneiden eine freie Öffnungsfläche, die maximal so groß ist wie eine durch den Rotorring begrenzte Fläche. Auf diese Weise kann gewährleistet werden, dass an der zuströmungsseitigen Öffnung ein Kernstrom abgetrennt und in die Mantelströmungsmaschine geleitet wird, dessen Querschnitt beziehungsweise Volumen vom Rotor und vom Fließpfad insgesamt ohne wesentliche Druck- und Geschwindigkeitserhöhung aufgenommen werden kann. Hierdurch kann der Kernstrom die Mantelströmungsmaschine im Wesentlichen laminar durchströmen, ohne beachtliche Verwirbelungen oder sonstige Turbulenzen zu erzeugen. Ein besonders ungestörtes Durchströmen der Kernströmung durch die Mantelströmungsmaschine kann dabei gewährleistet werden, wenn die freien Öffnungsflächen möglichst exakt einer Nettoringfläche des Rotorringes entsprechen, bei der die vom Rotorring begrenzte Fläche um die in Orthogonalrichtung zur Hauptachse maximal wirksamen Profilflächen der Rotorblätter reduziert wird. Durch diese Anpassung der stirnseitigen Eintritts- beziehungsweise Austrittsöffnung kann ein ungestörtes Durchströmen der Wasserturbine gewährleistet werden.

Darüber hinaus ist es besonders günstig, wenn die elektrische Maschine zwischen einem Generatorbetrieb und einem Antriebsbetrieb umgeschaltet werden kann, wie beispielsweise mittels einer elektrischen/elektronischen Steuerungseinrichtung. Hierdurch ist es möglich, die Mantelströmungsmaschine an einem Wasserfahrzeug zu verwenden, um dieses wahlweise mittels einer mit der elektrischen Maschine verbundenen Batterie anzutreiben oder die Batterie im Generatorbetrieb mittels der Mantelströmungsmaschine aufladen zu können. Auf diese Weise kann ein anderer Antrieb des Wasserfahrzeugs, wie beispielsweise in Form von Segeln oder eines Verbrennungsmotors, oder die Strömungskraft eines Fließgewässers zur Rückgewinnung elektrischer Energie und zum Aufladen einer an Bord des Wasserfahrzeugs befindlichen Akkumulatoreinrichtung genutzt werden.

Vorteilhafterweise ist das Mantelgehäuse an der Außenseite, wie insbesondere am Bug, eines Wasserfahrzeugs angeordnet. Das Mantelgehäuse kann dabei beispielsweise an einem vom Bug auskragenden Steuerungs- oder Stabilisierungsmittel wie einem Kiel, einem Ruder oder einer Stabilisierungsflosse gelagert sein, was insbesondere bei nachträglicher Anbringung eine leichtere Montage der Mantelströmungsmaschine ermöglicht.

Dabei ist es vorteilhaft, wenn die Mantelströmungsmaschine schwenkbar an dem Wasserfahrzeug gelagert ist, wodurch diese im Antriebsbetrieb selbst zur Steuerung des Wasserfahrzeugs beziehungsweise zur aktiven Unterstützung einer Steuerung das Wasserfahrzeugs genutzt werden kann.

Hierzu kann die Mantelströmungsmaschine in einer bevorzugten Ausführungsform beispielsweise an einem Steuerruder gehalten sein und zusammen mit diesem gegenüber dem übrigen Wasserfahrzeug verschwenkt werden.

Darüber hinaus ist die Hauptachse der Mantelströmungsmaschine in einer bevorzugten Ausführungsform in vertikaler Richtung verschwenkbar gelagert, wodurch sie im Antriebsbetrieb beispielsweise zum Ausgleich einer Krängung-, Gier- oder Nickbewegung des Wasserfahrzeuges eingesetzt werden kann.

Dabei ist es besonders vorteilhaft, wenn die Mantelströmungsmaschine mittels einer Steuerungselektronik verstellbar ist, die die Ausrichtung der Hauptachse der Mantelströmungsmaschine in Abhängigkeit von einer momentanen Ausrichtung des Wasserfahrzeugs, wie insbesondere einem Krängungs-, Gier- und/oder Nickwinkel selbsttätig einstellt. Hierdurch kann das betreffende Wasserfahrzeug mittels der wenigstens einen Mantelströmungsmaschine, vorzugsweise mittels zweier oder mehrerer Mantelströmungsmaschinen aktiv stabilisiert werden.

Ferner wird die oben genannten Aufgabe durch ein Wasserfahrzeug mit wenigstens zwei Mantelströmungsmaschinen in einer der oben genannten Ausführungsformen gelöst, wobei die Mantelgehäuse der Mantelströmungsmaschinen bezüglich einer vorgegebenen Fahrrichtung des Wasserfahrzeugs an voneinander abgewandten Bugseiten gelagert sind. Durch diese Anordnung der Mantelströmungsmaschinen an wenigsten zwei Seiten des Wasserfahrzeugs ist sowohl eine aktive Steuerungshilfe beziehungsweise eine eigenständige Steuerung des Wasserfahrzeugs über die Mantelströmungsmaschinen als auch eine umfassende Stabilisierung des Wasserfahrzeugs während der Fahrt möglich. Darüber hinaus ermöglicht eine derartige Anordnung im Antriebsbetrieb der Mantelströmungsmaschinen bei entgegengesetzter Ausrichtung eine Drehbewegung des Wasserfahrzeugs auf der Stelle.

In den Figuren ist eine beispielhafte Ausführungsform der Erfindung dargestellt. Es zeigen:
- Figur 1: eine perspektivische Ansicht einer erfindungsgemäßen Mantelströmungsmaschine,
- Figur 2: eine Draufsicht auf die Mantelströmungsmaschine in Richtung II aus Figur 1,
- Figur 3: eine längsgeschnittene Ansicht der Mantelströmungsmaschine nach Figur 1,
- Figur 4A: eine Ansicht eines Wasserfahrzeugs mit einer Mantelströmungsma schine nach Figur 1,
- Figur 4B: eine perspektivische Ansicht einer Steuerrudereinrichtung des Wasserfahrzeugs nach Fig. 4A und
- Figur 5: eine perspektivische Ansicht eines Bugabschnittes eines Wasser - fahrzeugs, an dem wenigstens zwei Mantelströmungsmaschinen gemäß Figur 1 vorgesehen sind.

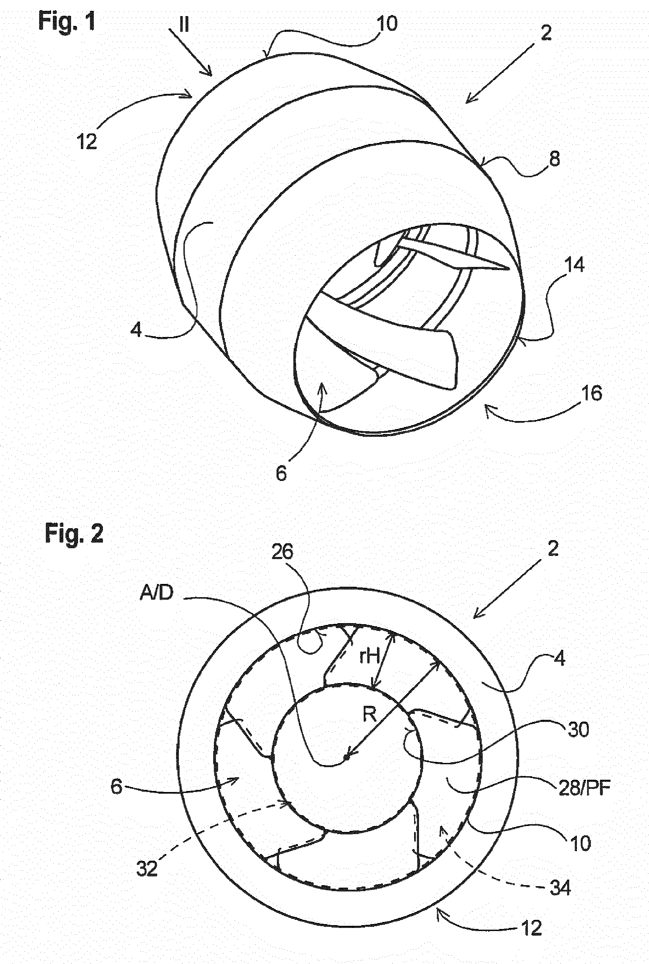

Fig. 1 und 2 zeigen eine Mantelströmungsmaschine 2, die sowohl als Generator zur Erzeugung von elektrischem Strom aus einer durchströmenden Wassermasse oder als Elektroantrieb für ein Wasserfahrzeug betrieben werden kann. Die Mantelströmungsmaschine 2 weist dabei ein Mantelgehäuse 4 auf, in dem eine elektrische Maschine 6 aufgenommen ist.

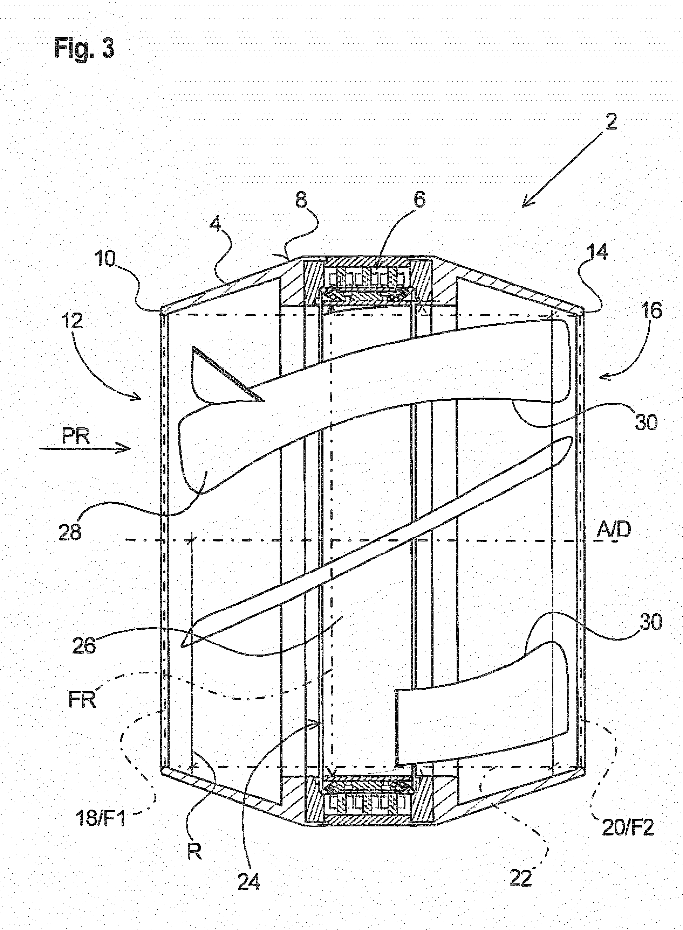

Das Mantelgehäuse 4 ist dabei derart ausgebildet, dass es an seiner Außenseite vom Wasser im Wesentlichen störungsfrei umströmt werden kann. Hierzu bildet das Mantelgehäuse 4 eine umfängliche Außenfläche 8 mit einer konvexen Kontur aus. Im Profil des Mantelgehäuses 4 erstreckt sich diese konvexe Außenfläche 8 von einer ersten Schneide 10, die an einer ersten Stirnseite 12 des Mantelgehäuses 4 angeordnet ist, stetig bis zu einer zweiten Schneide 14, die an einer zweiten Stirnseite 16 des Mantelgehäuses 4 angeordnet ist, wie insbesondere aus Figur 3 zu entnehmen ist.

Die erste Schneide 10 und die zweite Schneide 14 begrenzen hierbei eine erste stirnseitige Öffnung 18 beziehungsweise eine zweite stirnseitige Öffnung 20, zwischen denen sich ein Fließpfad 22 der Mantelströmungsmaschine 2 entlang einer Hauptachse A erstreckt. Der Fließpfad 22 erstreckt sich dabei durch einen Rotor 24 der elektrischen Maschine 6 hindurch, der gegenüber einem Stator 25 der elektrischen Maschine 6 verdrehbar gelagert ist. Der Stator 25 ist dabei wie dargestellt, innerhalb des konvexen Profils des Mantelgehäuses 4 aufgenommen. Am Rotor 24 und am Stator 25 sind hierbei nicht näher beschriebene Mittel zum Umwandeln mechanischer Bewegungsenergie in elektrische Energie und umgekehrt vorgesehen, die jede bekannte und geeignete Ausformung aufweisen können. Beispielsweise können diese Mittel elektrische Spulen umfassen, die mit einer Anordnung von Magneten zusammenwirken.

Der Rotor 24 weist ferner einen Rotorring 26 auf, von dem sich eine Anordnung von Rotorblättern in den Fließpfad 22 hinein erstreckt. Die Rotorblätter sind dabei durch Leitbleche 28 gebildet, die sich zu beiden Seiten hin über die axiale Länge des Rotorrings 26 hinaus erstrecken und in radialer Richtung nach innen einen freien Rand 30 ausbilden. Diese freien Ränder 30 der Leitbleche 28 begrenzen dabei, wie insbesondere aus Figur 2 zu entnehmen ist, eine freie Kreisfläche 32, die sich bei Drehbewegung des Rotors 24 im Betrieb um die Hauptachse A beziehungsweise um eine Drehachse D des Rotors 24 herum erstreckt. Diese freie Kreisfläche 32 begrenzt zusammen mit dem Rotorring 26 eine Projektionskreisringfläche 34, die in Projektionsrichtung PR parallel zur Hauptachse A zumindest größtenteils von Projektionsflächen PF der Leitbleche 28 abgedeckt wird.

Wie insbesondere aus Figur 2 zu entnehmen ist, erstreckt sich die Anordnung der Leitbleche 28 dabei quer zur Projektionsrichtung PR über mindestens 75 % der Projektionskreisringfläche 34, beziehungsweise deckt diese vorteilhafterweise vollständig ab. Zudem weisen die Leitbleche 28 innerhalb der Projektionskreisringfläche 34 bezüglich der Hauptachse A in radialer Richtung eine radiale Höhe rH auf, die weniger als 50 % des Radius R des Fließpfades 22 beträgt.

Wie aus Figur 3 zu entnehmen ist, begrenzt die erste Schneide 10 an der ersten stirnseitigen Öffnung 18 eine freie Öffnungsfläche F1, die in der dargestellten Ausführungsform etwas kleiner und in jedem Fall maximal so groß ist, wie eine durch den Rotorring 26 begrenzte Fläche FR. Bevorzugterweise ist die freie Öffnungsfläche F1 dabei maximal so groß wie eine Nettoringfläche, die sich aus der Fläche FR abzüglich der maximalen, sich in einer Orthogonalebene zur Hauptachse A erstreckenden Querschnittsfläche der Leitbleche 28 ergibt. Darüber hinaus begrenzt die zweite Schneide 14 an der zweiten stirnseitigen Öffnung 20 eine freie Öffnungsfläche F2, die ebenfalls maximal so groß ist, wie die durch den Rotorring 26 begrenzte Fläche FR beziehungsweise die Nettoringfläche.

Wie aus Figur 3 ferner zu entnehmen ist, sind die Leitbleche 28 symmetrisch ausgebildet. Darüber hinaus ist auch das Mantelgehäuse 4 bezüglich einer orthogonalen Ebene zur Hauptachse A symmetrisch ausgebildet und weist an beiden Stirnseiten einen cW-Wert auf, der maximal 0,4 beträgt. Durch diese Symmetrie der Mantelströmungsmaschine 2 und durch den entlang der Hauptachse A in beide Richtungen wirkenden relativ geringen cW-Wert kann die Mantelströmungsmaschine 2 somit in beide Strömungsrichtungen mit relativ hoher Leistung betrieben werden.

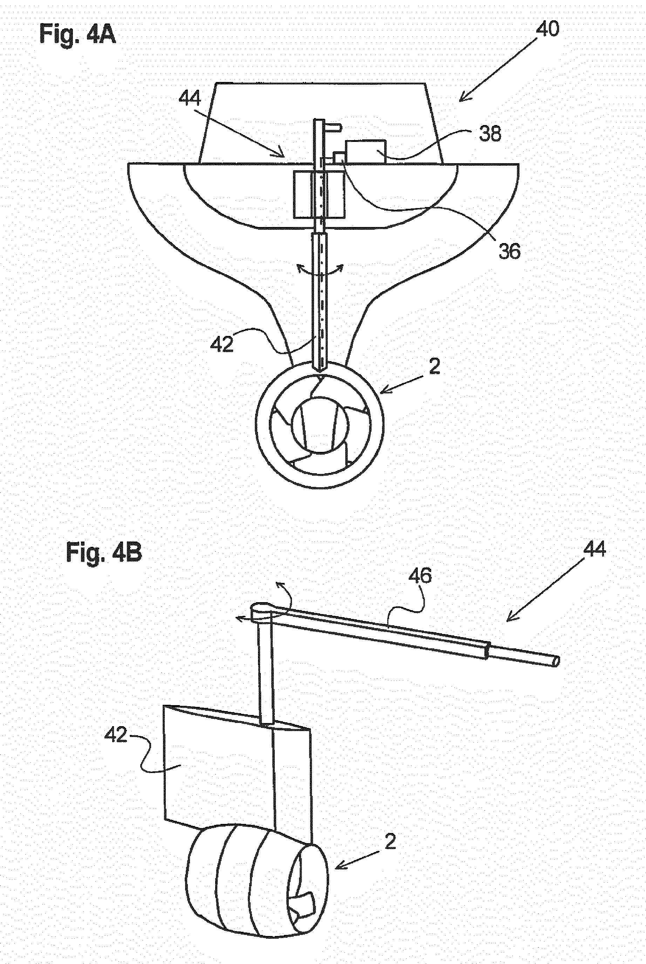

Zudem ist es hierdurch auch möglich die elektrische Maschine 6 zwischen einem Generatorbetrieb und einem Antriebsbetrieb umzuschalten. Hierzu kann die Mantelströmungsmaschine 2, wie in Figur 4A dargestellt, über eine elektrische/elektronische Steuerungseinrichtung 36 mit einer Akkumulatoreinheit 38 verbunden sein. Über diese Steuerungseinrichtung 36 kann dabei eingestellt werden, ob die Akkumulatoreinheit 38 mittels der Mantelströmungsmaschine 2 elektrisch aufgeladen oder die Mantelströmungsmaschine 2 mittels der Akkumulatoreinheit 38 angetrieben werden soll.

Auf diese Weise dient die Mantelströmungsmaschine 2 zum Beispiel wahlweise zum Aufladen der Akkumulatoreinheit 38 in Form einer Bordbatterie eines Wasserfahrzeugs 40 oder als elektrischer Antrieb desselben. Hierzu ist die Mantelströmungsmaschine 2 wie in den Figuren 4A und 4B dargestellt beispielsweise am Steuerruder 42 einer Steuervorrichtung 44 des Wasserfahrzeugs 40 gehalten. Dadurch kann die Mantelströmungsmaschine 2 zusammen mit dem Steuerruder 42 mittels einer Handhabe, wie einer Pinne 46 oder einem Steuerrad (nicht dargestellt) verschwenkt werden.

Die Mantelströmungsmaschine 2 ist sowohl als Teil eines Hauptantriebssystems zum elektrischen Antrieb des Wasserfahrzeugs 40 oder als Teil eines Hilfsantrieb-Systems zur aktiven Unterstützung von Steuerungsmanövern verwendbar, wobei jeweils eine elektrische Energie-Rückgewinnung im Generatorbetrieb der Maschine 6 möglich ist.

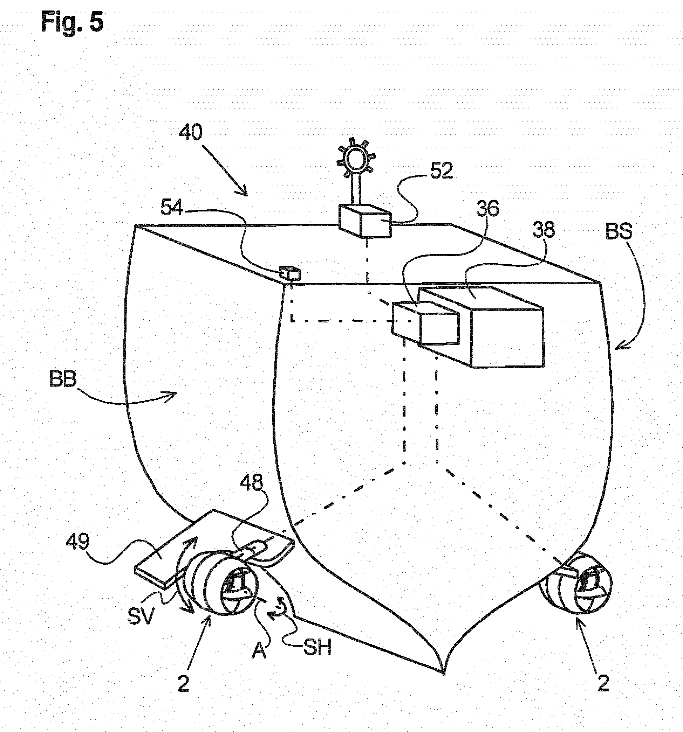

In der Ausführungsform nach Fig. 5 ist die Mantelströmungsmaschine 2 derart über ein Drehgelenk 48 am Wasserfahrzeug 40 gelagert, dass dessen Hauptachse A entlang einer im Wesentlichen vertikalen Schwenkrichtung SV und/oder entlang einer horizontalen Schwenkrichtung SH verstellt werden kann. In der dargestellten Ausführungsform ist das Drehgelenk 48 dabei beispielhaft an einer Stabilisierungsflosse 49 des Wasserfahrzeugs 40 angebracht, was eine leichtere Montage der Mantelströmungsmaschine 2, insbesondere bei nachträglicher Anbringung ermöglicht.

Das Wasserfahrzeug 40 nach Fig. 5 weist dabei an zwei voneinander abgewandten Bugseiten BB und BS jeweils eine Mantelströmungsmaschine 2 auf. Jede der Mantelströmungsmaschinen 2 steht dabei über die elektrische/elektronische Steuerungseinrichtung 36 in Verbindung mit einem Steuerstand 52 und/oder einer Sensorik 54. Mittels dieser Sensorik 54 kann dabei fortlaufend ein Krängungs-, Gier- und/oder Nickwinkel des Wasserfahrzeugs 40 ermittelt werden.

In Abhängigkeit von den jeweils aktuellen Steuerungssignalen, die vom Steuerstand 52 und/oder der Sensorik 54 an die elektrische/elektronische Steuerungseinrichtung 36 abgegeben werden, können die Mantelströmungsmaschinen 2 gegenüber dem übrigen Wasserfahrzeug 40 ausgerichtet und hinsichtlich ihrer Leistung gesteuert werden. Auf diese Weise kann das Wasserfahrzeug 40 über den Steuerstand 52 mittels der Mantelströmungsmaschinen 2 selbst oder zumindest mit Unterstützung der Mantelströmungsmaschinen 2 manuell gesteuert werden. Alternativ oder zusätzlich hierzu können die Mantelströmungsmaschinen 2 in Abhängigkeit von den Signalen der Sensorik 54 über die elektrische/elektronische Steuerungseinrichtung 36 selbsttätig ausgerichtet und in ihrer Leistung gesteuert werden, um eine momentane Krängungs-, Gier- oder Nickbewegung des Wasserfahrzeugs 40 auszugleichen und dieses dadurch aktiv zu stabilisieren.

## Patentansprüche

1. Mantelströmungsmaschine (2), die sowohl als Elektroantrieb als auch als Generator betreibbar ist,
mit einem an einer Außenseite umströmbaren Mantelgehäuse (4), dessen Profil sich zu einer ersten Stirnseite (12), an der eine erste stirnseitige Öffnung (18) ausgebildet ist, und zu einer zweiten Stirnseite (16), an der eine zweite stirnseitige Öffnung (20) ausgebildet ist, hin verjüngt, wobei sich zwischen den beiden stirnseitigen Öffnungen (18, 20) ein Fließpfad (22) entlang einer Hauptachse (A) erstreckt, und
einer elektrischen Maschine (6), die am Mantelgehäuse (4) einen Stator (25) und einen innerhalb des Stators (25) verdrehbar gelagerten Rotor (24) aufweist, wobei der Rotor (24) eine freie Drehachse (D) definiert und dabei einen Rotorring (26) und eine Anordnung von sich ausgehend vom Rotorring (26) zu einem jeweiligen freien Rand (30) hin radial erstreckenden Rotorblättern aufweist und die freien Ränder (30) der Rotorblätter in Projektionsrichtung (PR) parallel zur Hauptachse (A) eine freie Kreisfläche (32) begrenzen,
**dadurch gekennzeichnet, dass** die Rotorblätter durch Leitbleche (28) gebildet sind, die sich in Richtung der Hauptachse (A) wenigstens über die gesamte axiale Länge des Rotorrings (26) erstrecken.

2. Mantelströmungsmaschine nach Anspruch 1, **dadurch gekennzeichnet, dass** sich die Leitbleche (28) in Richtung der Hauptachse (A) beidseitig über die axiale Länge des Rotorrings (26) hinaus erstrecken.

3. Mantelströmungsmaschine nach Anspruch 1 oder 2, **dadurch gekennzeichnet, dass** sich die Leitbleche (28) bezüglich der Hauptachse (A) über eine radiale Höhe (rH) erstrecken, die weniger als 50% des Innenradius (R) des Rotorringes (26) beträgt.

4. Mantelströmungsmaschine nach einem der Ansprüche 1 bis 3, **dadurch gekennzeichnet, dass** die Leitbleche (28) in einer Projektionsrichtung (PR) parallel zur Hauptachse (A) Projektionsflächen (PF) erzeugen, die sich in einer Projektionskreisringfläche (34) zwischen der freien Kreisfläche (32) und dem Rotorring (26) über wenigstens 75% erstrecken.

5. Mantelströmungsmaschine nach einem der Ansprüche 1 bis 4, **dadurch gekennzeichnet, dass** die Leitbleche (28) symmetrisch ausgebildet sind.

6. Mantelströmungsmaschine nach einem der Ansprüche 1 bis 5, **dadurch gekennzeichnet, dass** das Mantelgehäuse (4) symmetrisch ausgebildet ist.

7. Mantelströmungsmaschine nach einem der Ansprüche 1 bis 6, **dadurch gekennzeichnet, dass** das Mantelgehäuse (4) in Richtung beider Stirnseiten (12, 16) einen cW-Wert von maximal 0,4 aufweist.

8. Mantelströmungsmaschine nach einem der Ansprüche 1 bis 7, **dadurch gekennzeichnet, dass** das Mantelgehäuse (4) an der ersten Stirnseite (10) eine die erste Öffnung (18) begrenzende erste Schneide (10) und an der zweiten Stirnseite (16) eine die zweite Öffnung (20) begrenzende zweite Schneide (14) aufweist, die an voneinander abgewandten Seiten in eine umfängliche Außenseite (8) übergehen, die über ihre Erstreckung parallel zur Hauptachse (A) hinweg eine stetige konvexe Kontur aufweist.

9. Mantelströmungsmaschine nach Anspruch 8, **dadurch gekennzeichnet, dass** beide Schneiden (10, 14) eine freie Öffnungsfläche (F1; F2) begrenzen, die maximal so groß ist wie eine durch den Rotorring (26) begrenzte Fläche (FR).

10. Mantelströmungsmaschine nach einem der Ansprüche 1 bis 9, **dadurch gekennzeichnet, dass** die elektrische Maschine (6) zwischen Generatorbetrieb und Antriebsbetrieb umschaltbar ist.

11. Mantelströmungsmaschine nach einem der Ansprüche 1 bis 10, **dadurch gekennzeichnet, dass** das Mantelgehäuse (4) an der Außenseite eines Wasserfahrzeugs (40) angeordnet ist.

12. Mantelströmungsmaschine nach Anspruch 11, **dadurch gekennzeichnet, dass** das Mantelgehäuse (4) schwenkbar gelagert ist.

13. Mantelströmungsmaschine nach Anspruch 12, **dadurch gekennzeichnet, dass** das Mantelgehäuse (4) an einem verschwenkbaren Steuerruder (42) des Wasserfahrzeugs (40) gehalten ist.

14. Mantelströmungsmaschine nach einem der Ansprüche 12 bis 14, **dadurch gekennzeichnet, dass** die Hauptachse (A) der Mantelströmungsmaschine (2) in vertikaler Richtung verschwenkbar ist.

15. Mantelströmungsmaschine nach einem der Ansprüche 12 bis 14, **dadurch gekennzeichnet, dass** die Mantelströmungsmaschine (2) mittels einer elektrischen/elektronischen Steuerungseinrichtung (36) verstellbar ist, die die Ausrichtung der Hauptachse (A) der Mantelströmungsmaschine (2) in Abhängigkeit von einer Ausrichtung des Wasserfahrzeugs (40) einstellt.

16. Wasserfahrzeug mit wenigstens zwei Mantelströmungsmaschinen nach einem der Ansprüche 1 bis 15, **dadurch gekennzeichnet, dass** die Mantelgehäuse (4) der Mantelströmungsmaschinen (2) bezüglich einer vorgegebenen Fahrrichtung des Wasserfahrzeugs (40) an voneinander abgewandten Bugseiten (BB; BS) gelagert sind.
